# EUROPÄISCHE PATENTSCHRIFT

(11) **EP 2 479 539 B1**
(45) Veröffentlichungstag und Bekanntmachung des Hinweises auf die Patenterteilung: **05.08.2015**
(21) Anmeldenummer: 11186631.5
(22) Anmeldetag: 26.10.2011
(51) Int. Cl.: G01D 5/14, G01D 5/244, G01D 11/30

(54) **Winkelmesseinrichtung**
Angle measuring equipment
Dispositif de mesure d'angle

(30) Priorität: 25.01.2011 DE 102011003091
(43) Veröffentlichungstag der Anmeldung: 25.07.2012
(73) Patentinhaber: Dr. Johannes Heidenhain GmbH, 83301 Traunreut (DE)
(72) Erfinder: Mitterreiter, Johann, 83339 Chieming (DE)

(56) Entgegenhaltungen:
- EP-A1- 0 066 636
- EP-A1- 0 682 229
- EP-A1- 1 517 120
- EP-A1- 1 752 741
- EP-A2- 0 913 669
- DE-A1- 10 242 252
- DE-A1-102006 045 792
- US-A- 4 556 792

## Beschreibung

Die Erfindung betrifft eine Winkelmesseinrichtung, umfassend ein Trägerelement und eine darauf befestigte Teilungsscheibe, deren Winkelstellung von einer Abtasteinheit mit einem Sensorelement erfassbar ist, gemäß dem Anspruch 1.

Derartige Winkelmesseinrichtungen dienen zur Messung von Drehbewegungen einer Welle über eine oder mehrere Umdrehungen. Die Drehbewegung wird dabei entweder inkremental oder absolut erfasst, der ausgegebene Messwert ist abhängig davon eine Folge von Zählimpulsen ein Zählerwert oder ein Codewort. Winkelmesseinrichtungen werden insbesondere bei Werkzeugmaschinen beziehungsweise Bearbeitungszentren für die Messung von rotatorischen Bewegungen eingesetzt. Die Bestimmung der Drehwinkel auf nur wenige Winkelsekunden genau ist beispielsweise für Rundtische oder Schwenkköpfe von Werkzeugmaschinen, C-Achsen von Drehmaschinen aber auch bei Druckwerken von Druckmaschinen von entscheidender Bedeutung. Da bei Verwendung von optischen Messprinzipien überaus genaue Messergebnisse erreichbar sind, werden derartige Winkelmesseinrichtungen regelmäßig mit einem optischen Messsystem ausgestattet. Dabei kommen meist transparente Teilungsscheiben, auf denen eine Winkelteilung bzw. - skalierung aufgebracht ist zum Einsatz. Die Teilungsscheiben müssen im Sinne eines genauen Messergebnises exakt auf dem zu messenden Bauteil befestigt sein.

Aus der Offenlegungsschrift DE 102 15 997 A1 ist ein Drehgeber mit einer selbstzentrierenden Spanneinrichtung bekannt, bei dem eine Welle von einer Geberwelle als Trägerelement für eine Teilungsscheibe umschließend aufgenommen wird.

Die Europäische Offenlegungsschrift EP 0 682 229 A1 offenbart einen Drehgeber, der eine Spannzange zur umschließenden Aufnahme einer Welle aufweist. Die Spannzange ist reibschlüssig in einer Geberwelle angeordnet und kann dort optional mit einem radial eingesetzten Stift formschlüssig gesichert werden.

Gemäß der EP 1 517 120 A1 wird eine zur umschließenden Aufnahme einer Welle ausgestaltete Spannzange durch radiales Aufspreizen gegen eine Geberwelle gedrückt.

Aus der DE 10 2006 045 792 A1 ist eine selbstzentrierend Nabe bekannt, bei der ein Klemmstück in Verbindung mit einem Ritzel zur Herbeiführung einer konischen Verklemmung vorgesehen ist.

In der Druckschrift US 4 556 792 ist eine Transportsicherung für einen lagerlosen Drehgeber gezeigt, mit einer Bügelkonstruktion, so dass der werksseitig justierte Abtastabstand bis zum Abschluss der Montage des Drehgebers am endgültigen Einsatzgerät beibehalten werden kann.

Die Druckschrift DE 102 42 252 A1 zeigt einen Lenkwinkelsensor mit elastischen Lagerfortsätzen, durch die ein Spiel in radialer Richtung zwischen dem Rotor und dem Stator vermieden werden soll.

Gemäß der EP 1 752 741 A1 wird eine zur umschließenden Aufnahme einer Welle ausgestaltete Spannzange durch radiales Aufspreizen gegen eine Geberwelle gedrückt, wobei die Spannzange an zwei entgegengesetzten Enden der Geberwelle klemmt.

In der EP 0 913 669 ist eine selbstzentrierende Teilscheibenanordnung offenbart mit einem radial-elastischen Element.

Schließlich offenbart die Europäische Offenlegungsschrift EP 0 066 636 A1 einen optischen Impulsgeber, wobei zur kraftschlüssigen Verbindung zwischen Nabe und Welle eine Spannzange verwendet wird.

Der Erfindung liegt die Aufgabe zu Grunde, eine Winkelmesseinrichtung der eingangs genannten Art zu schaffen, durch die höchste Anforderungen bezüglich Sicherheit und Präzision erfüllt werden können.

Diese Aufgabe wird erfindungsgemäß durch die Schaffung einer Winkelmesseinrichtung mit den Merkmalen des Patentanspruchs 1 gelöst.

Entsprechend weist die Winkelmesseinrichtung eine erste Bauteilgruppe und eine zweite Bauteilgruppe auf, wobei die Bauteilgruppen relativ zueinander um eine Achse drehbar gelagert sind, wobei durch die Winkelmesseinrichtung eine relative Winkelstellung zwischen den Bauteilgruppen bestimmbar ist. Die erste Bauteilgruppe umfasst ein Trägerelement zur umschließenden Aufnahme einer Welle, an dem eine Teilungsscheibe befestigt ist. Weiterhin umfasst die erste Bauteilgruppe ein Verbindungselement sowie ein Mittel zur Festlegung des Verbindungselements relativ zum Trägerelement. Demgegenüber umfasst die zweite Bauteilgruppe ein Sensorelement zum Abtasten der Teilungsscheibe. Das Trägerelement sowie das Verbindungselement sind so ausgestaltet, dass das Verbindungselement mit dem Trägerelement in einer Weise in Wirkverbindung bringbar ist, dass ein Drehmoment um die Achse zwischen dem Verbindungselement und dem Trägerelement formschlüssig übertragbar ist, wobei durch das Mittel zur Festlegung des Verbindungselements das Verbindungselement durch axiale Verschiebung in eine Formschlussposition bringbar und radial gegen die Welle vorspannbar ist.

Dabei wird das Verbindungselement vom Mittel zur Festlegung des Verbindungselements zunächst axial gegen das Trägerelement gedrückt, wobei das Trägerelement auf der Welle axial gesichert ist, beispielsweise durch einen Anschlag, so dass die Verschiebbarkeit des Trägerelements relativ zur Welle begrenzt ist. Durch entsprechende Elastizitäten ist dann bei weiterer vergleichsweise geringfügiger axi-aler Verschiebung des Mittels die radiale Vorspannung zwischen dem Verbindungselement und der Welle aufbaubar.

Als Teilungsscheibe ist beispielsweise ein ringförmiger Körper oder ein Körper in Ring- oder Kreissegmentgeometrie zu verstehen, welcher mit einer Winkelteilung bzw. Winkelskalierung versehen ist.

Das Trägerelement ist vorzugsweise als eine Hohlwelle ausgestaltet, so dass die Welle in den hohlzylindrischen Raum des Trägerelements umschließend aufgenommen werden kann.

Durch die Erfindung ist eine Wirkverbindung zwischen dem Verbindungselement und dem Trägerelement herstellbar, die in Radialrichtung keine relevanten Vorspannungen im Trägerelement erzeugt, so dass Messfehler bei der Bestimmung der Winkelstellung infolge radialer Verformung des Trägerelements unterbleiben. Insbesondere sind das Trägerelement, das Verbindungselement und das Mittel zur Festlegung des Verbindungselements drei separate Bauelemente bzw. Bauteile, welche aus Stahl gefertigt sein können. Die Verbindung der Winkelmesseinrichtung mit der Welle ist mit Vorteil als eine lösbare Verbindung ausgestaltet, wobei das Trägerelement, das Verbindungselement und das Mittel zur Festlegung sowie die Welle wieder voneinander separierbar sind. Die Welle kann ebenfalls aus Stahl hergestellt sein.

Mit Vorteil weist das Verbindungselement einen höheren Härtewert auf als die Welle und / oder das Trägerelement. Ebenso kann das Mittel zur Festlegung einen höheren Härtewert aufweisen als die Welle und / oder das Trägerelement.

Zur Übertragung des Drehmoments zwischen dem Verbindungselement und dem Trägerelement um die Achse weisen das Verbindungselement und das Trägerelement einander berührende Mitnehmerflächen auf, deren Ausrichtung eine achsparallele Richtung aufweist, bzw. deren jeweiliger Normalenvektor eine tangentiale Richtungskomponente bezogen auf die Achse aufweist. Die Mitnehmerflächen können eben oder gekrümmt, beispielsweise als Mantelflächen eines Zylinders, ausgestaltet sein.

In einer weiteren Ausgestaltung der Erfindung ist die radiale Vorspannung durch eine Keilwirkung insbesondere zwischen dem Mittel zur Festlegung des Verbindungselements und dem Verbindungselement erzeugbar. Die Winkelmesseinrichtung kann zudem derart konfiguriert sein, dass das Mittel zur Festlegung des Verbindungselements oder das Verbindungselement selbst jeweils eine Formschräge zur Erzielung der Keilwirkung aufweist. Alternativ können sowohl das Mittel zur Festlegung des Verbindungselements als auch das Verbindungselement selbst jeweils eine Formschräge aufweisen. Die Formschrägen können beispielsweise als geneigte ebene Flächen oder als Teilsegmente einer Kegelfläche ausgebildet sein.

Mit Vorteil ist die Winkelmesseinrichtung so konfiguriert, dass das Mittel zur Festlegung des Verbindungselements als geschlossener Ring ausgestaltet ist. Der Begriff geschlossener Ring ist im Folgenden insbesondere so zu verstehen, dass das Mittel eine über 360° umlaufende geschlossene Form mit innen liegender Öffnung aufweist. Weiterhin kann das Mittel zur Festlegung des Verbindungselements ein Innengewinde aufweisen. Insbesondere kann das Innengewinde so ausgestaltet sein, dass das Mittel auf die Welle nach dem Prinzip einer Wellenmutter schraubbar ist.

In vorteilhafter Weise umfasst die Winkelmesseinrichtung ein elastisches Bauteil, welches zwischen dem Mittel zur Festlegung des Verbindungselements sowie dem Verbindungselement selbst angeordnet ist. Als elastisches Bauteil kann beispielsweise ein Kunststoffbauteil oder eine Elastomerbauteil, etwa aus Gummi, verwendet werden. Alternativ oder ergänzend kann ein Wellfeder-oder Tellerfeder-Bauteil an dieser Stelle zum Einsatz kommen.

Naturgemäß weist das Trägerelement ein erstes und ein zweites Ende bezogen auf seine axiale Ausdehnung auf. Entsprechend kann die Winkelmesseinrichtung so ausgestaltet sein, dass das Verbindungselement an einem axialen Ende des Trägerelements angreift und am anderen axialen Ende des Trägerelements eine Fläche hergestellt ist, welche reibschlüssig mit der Welle, bzw. mit einem Absatz der Welle, in Wirkverbindung bringbar ist.

Mit Vorteil ist die Winkelmesseinrichtung so konfiguriert, dass das Mittel zur Festlegung des Verbindungselements aus Axialrichtung betätigbar ist. Insbesondere kann das Mittel so ausgestaltet sein, dass dieses von einem Werkzeug, welches aus der Axialrichtung heranführbar ist, betätigbar ist. Auf eine Zugangsmöglichkeit zum Mittel zur Festlegung des Verbindungselements aus Radialrichtung kann dann verzichtet werden.

In einer weiteren Ausgestaltung der Erfindung ist die Formschlussverbindung zwischen dem Verbindungselement und dem Trägerelement unter Verwendung einer Spielpassung oder einer Übergangspassung herstellbar. Auf diese Weise kann sichergestellt werden, dass durch die Formschlussverbindung in das Trägerelement keine unzulässigen Spannungen einleitbar sind. Entsprechend werden durch die Formschlussverbindung keinerlei Verformungen des Trägerelements hervorgerufen, welche zu einer Reduzierung der Messgenauigkeit führen könnten.

Mit Vorteil weist das Verbindungselement an seiner im bestimmungsgemäßen Gebrauch zur Achse hingewandten Seite eine ebene Fläche auf, so dass diese ebene Fläche mit einer weiteren ebenen Fläche der Welle zusammenwirken kann.

Weiterhin kann das Verbindungselement an seiner im bestimmungsgemäßen Gebrauch zur Achse hingewandten Seite einen Vorsprung oder eine Nut aufweisen, welche jeweils in Radialrichtung hervorragt oder rückspringt.

In weiterer Ausgestaltung der Erfindung können mehrere über den Umfang des Trägerelements verteilte Verbindungselemente angeordnet werden. Bei dieser Bauweise kann aber trotzdem nur ein einziges Mittel zur Festlegung der Verbindungselemente verwendet werden. Mit Vorteil können die Verbindungselemente, insbesondere im Sinne einer Verliersicherung, miteinander verbunden sein, beispielsweise durch einen umlaufenden Körper, etwa einem Ringkörper oder einer Feder oder einem offenen Federdraht. Mit Vorteil ist der Körper oder Ringkörper axial-elastisch ausgestaltet, so dass dieser bei Betätigung des Mittels zur Festlegung des Verbindungselements elastisch verformbar ist. Die elastische Verformung kann dabei einer Kompression des Körpers bzw. Ringkörpers in Axialrichtung entsprechen. Gleichzeitig können dann Verbindungselemente in Umfangsrichtung gegen Mitnehmerflächen des Trägerelements gedrückt werden.

Zusätzliche vorteilhafte Ausgestaltungen der Erfindung sind den abhängigen Ansprüchen zu entnehmen.

Weitere Merkmale und Vorteile der Erfindung werden bei der nachfolgenden Beschreibung mehrerer Ausführungsbeispiele anhand der Figuren deutlich werden.

Es zeigen die:
- Figur 1: eine Teil-Längsschnittdarstellung durch eine Winkelmesseinrichtung,
- Figur 2: eine Teil-Querschnittdarstellung der Winkelmesseinrichtung, gemäß der Ansicht B - B
- Figur 3: eine Detailansicht mit einem Verbindungselement der Winkelmesseinrichtung,
- Figur 4: eine vergrößerte Detailansicht mit einem Verbindungselement der Winkelmesseinrichtung,
- Figur 5: eine vergrößerte Detailansicht mit einem Verbindungselement der Winkelmesseinrichtung, gemäß einem zweiten Ausführungsbeispiel,
- Figur 6: eine vergrößerte Detailansicht mit einem Verbindungselement der Winkelmesseinrichtung, gemäß einem dritten Ausführungsbeispiel
- Figur 7: eine Draufsicht auf mehrere Verbindungselemente, die mit einem Ring zusammengefasst sind, gemäß einem vierten Ausführungsbeispiel,
- Figur 8: eine Schnittdarstellung auf die Verbindungselemente mit dem Ring, gemäß dem vierten Ausführungsbeispiel,
- Figur 9: eine Detailansicht mit einem Verbindungselement der Winkelmesseinrichtung gemäß dem vierten Ausführungsbeispiel,
- Figur 10: eine Draufsicht auf mehrere Verbindungselemente, die mit einem Ring zusammengefasst sind, gemäß einem fünften Ausführungsbeispiel,
- Figur 11: eine Schnittdarstellung auf die Verbindungselemente mit dem Ring, gemäß dem fünften Ausführungsbeispiel,
- Figur 12: eine Detailansicht mit einem Verbindungselement der Winkelmesseinrichtung gemäß dem fünften Ausführungsbeispiel.

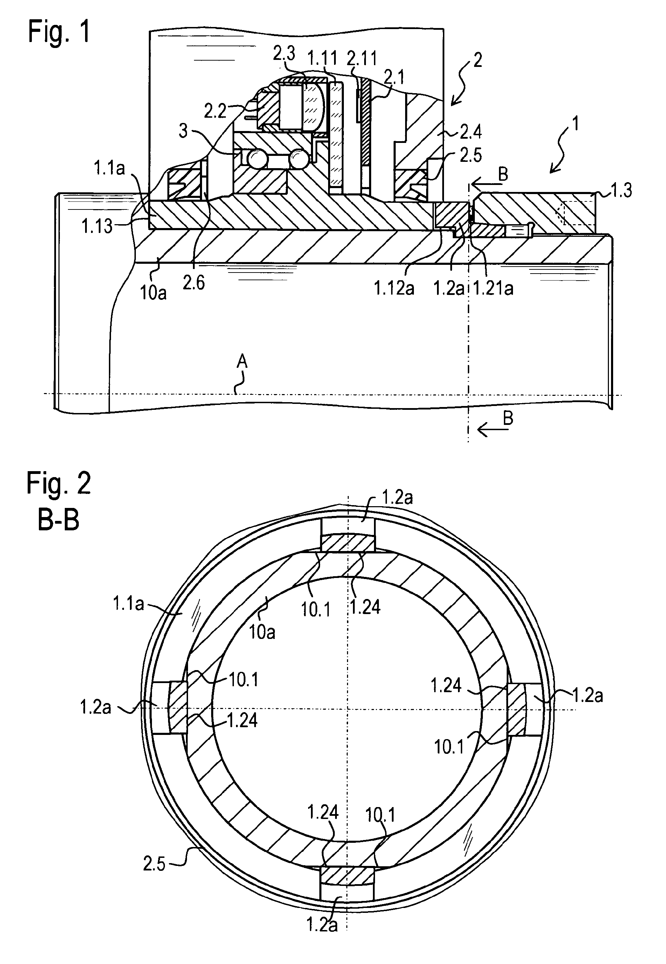

Im Folgenden werden bei gleichen Bauteilen gleiche Bezugszeichen verwendet. In der Figur 1 ist ein Teil-Längsschnitt durch eine Winkelmesseinrichtung dargestellt. Die Winkelmesseinrichtung umfasst eine erste Bauteilgruppe, die im vorgestellten Ausführungsbeispiel als Rotor 1 bezeichnet werden kann. Der Rotor 1 ist um eine Achse A relativ zu einer zweiten Bauteilgruppe drehbar, wobei die zweite Bauteilgruppe hier als Stator 2 ausgestaltet ist.

Der Rotor 1 der Winkelmesseinrichtung umfasst ein Trägerelement 1.1a, hier als eine Hohlwelle ausgebildet, deren hohlzylindrischer Innenraum zur drehfesten Aufnahme einer zu messende Welle 10a vorgesehen ist, so dass die Welle 10a vom Trägerelement 1.1a umschlossen wird (siehe auch die Figur 2). Am Rotor 1, bzw. am Trägerelement 1.1 a, ist eine Teilungsscheibe 1.11, auf der eine Winkelskalierung aufgebracht ist, mittels einer starren Klebeverbindung befestigt. Die Teilungsscheibe 1.11 ist aus einem Glaswerkstoff gefertigt, wobei die Winkelskalierung ringförmig umlaufend auf einer Stirnseite der Teilungsscheibe 1.11 angeordnet ist. Die Winkelskalierung kann als eine inkrementale Winkelteilung und / oder als eine absolute Winkelcodierung ausgestaltet sein. Die Achse A stellt im Übrigen auch die geometrische Rotationsachse der Teilungsscheibe 1.11 dar. Am Trägerelement 1.1a, welches aus Stahl gefertigt ist, ist überdies ein Innenring eines Wälzlagers 3 befestigt. Dieser Innenring umfasst eine Lauffläche für Wälzkörper, insbesondere für Kugeln. Das vorliegende Wälzlager 3 weist eine überaus hohe Präzision insbesondere im Hinblick auf seinen Rundlauf auf.

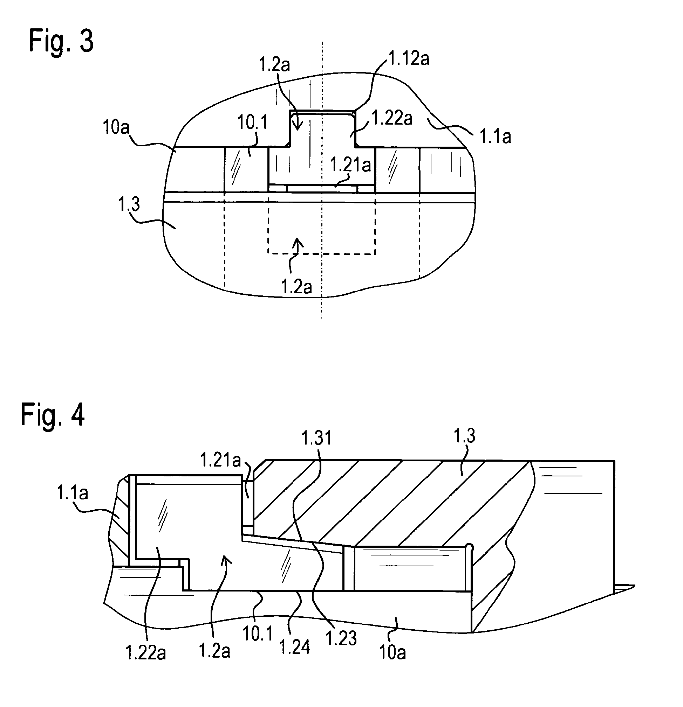

Das Trägerelement 1.1a umfasst weiterhin insgesamt vier über den Umfang mit 90°-Versatz verteilte Ausnehmungen 1.12a, wobei eine der Ausnehmungen 1.12a beispielsweise auch in der Figur 3 dargestellt ist. In diese Ausnehmungen 1.12a ragt jeweils ein Vorsprung 1.22a eines Verbindungselements 1.2a. Die Breite des Vorsprungs 1.22a, sowie die Breite der Ausnehmung 1.12a - jeweils im Hinblick auf die Umfangsrichtung - sind so dimensioniert, dass beim Einführen des Vorsprungs 1.22a in die Ausnehmung 1.12a eine Übergangspassung oder eine Spielpassung vorliegt. Das Verbindungselement 1.2a weist in der Seitenansicht eine z-förmige Gestalt auf, wobei ein Schenkel des Verbindungselements 1.2a eine Formschräge 1.23 aufweist, die im vorgestellten Ausführungsbeispiel geometrisch ein Teilsegment einer Kegelmantelfläche ist. Dieser Formschräge 1.23 radial innen gegenüberliegend weist das Verbindungselement 1.2a eine ebene Fläche 1.24 auf. Am Verbindungselement 1.2a ist außerdem ein elastisches Bauteil 1.21a angeordnet, das gemäß dem Ausführungsbeispiel als ein Gummielement ausgestaltet ist. An demjenigen axialen Ende des Trägerelements 1.1 a, welches der Ausnehmung 1.12a axial gegenüberliegt, ist gemäß der Figur 1 eine ringförmige ebene Stirnfläche 1.13 hergestellt.

Der Rotor 1 umfasst außerdem ein Mittel zur Festlegung des Verbindungselements 1.2a relativ zum Trägerelement 1.1a, welches gemäß dem Ausführungsbeispiel als ein geschlossener Ring 1.3 mit einem Innengenwinde ausgestaltet ist. Weiterhin weist der Ring 1.3 an seiner Innenseite eine konische Fläche 1.31 auf (Figur 4).

Demgegenüber umfasst der Stator 2 gemäß der Figur 1 ein Gehäuse 2.4, welches in der Regel für den Messbetrieb an einem Maschinenteil starr fixiert wird und dazu dient den Innenraum der Winkelmesseinrichtung vor Umwelteinflüssen zu schützen. In diesem Zusammenhang ist zudem eine Dichtung 2.5 zwischen dem Trägerelement 1.1a. und dem Gehäuse 2.4 vorgesehen. Im Gehäuse 2.4 befindet sich eine so genannte Abtasteinheit, welche eine LED 2.2, einen Kondensor 2.3 und eine Abtastplatine 2.1 umfasst, wobei ein Sensorelement 2.11 mit einer integrierten Schaltung auf der Abtastplatine 2.1 montiert ist. Das Sensorelement 2.11 mit der integrierten Schaltung ist hier als ein so genannter Opto-ASIC ausgestaltet. Die als Lichtquelle dienende LED 2.2 sendet Licht durch den Kondensor 2.3 und danach durch die Teilungsscheibe 1.11. Die LED 2.2, der Kondensor 2.3 und das Sensorelement 2.11 sind dabei dem Stator 2, also der zweiten Bauteilgruppe der Winkelmesseinrichtung zugeordnet. Dagegen ist die Teilungsscheibe 1.11, wie bereits erwähnt, am drehbaren Trägerelement 1.1a befestigt. Die Teilungsscheibe 1.11, welche also zwischen der Lichtquelle 2.2 und dem Sensorelement 2.11 angeordnet ist, vermag durch ihre Winkelskalierung das eingestrahlte Licht entsprechend der Winkelstellung des Trägerelements 1.1a zu modulieren. Das modulierte Licht trifft schließlich auf Fotodetektoren des Sensorelements 2.11. Durch diese Abtastung entstehen fotoelektrische Signale, welche die Information über die Winkelstellung des Trägerelements 1.1a bzw. der Welle 10a enthalten. Die fotoelektrisch erzeugten Signale werden durch die integrierte Schaltung des Sensorelements 2.11 weiterverarbeitet. Die weiterverarbeiteten Positionssignale werden schließlich über ein Kabel an ein weiteres Gerät ausgegeben, z. B. an eine Steuerungseinrichtung einer Maschine. Eine derartige nach einem optischen Prinzip arbeitende Winkelmesseinrichtung misst Winkelstellungen zwischen dem Trägerelement 1.1a und dem Stator 2 auf wenige Winkelsekunden genau bzw. auf wenige Zehntel-Winkelsekunden genau. Entsprechend ist es wichtig, dass die Komponenten der Abtasteinheit sowie die Teilungsscheibe 1.11 überaus präzise zueinander platziert sind und dass die Teilungsscheibe 1.11 sehr exakt relativ zur Abtasteinheit drehbar gelagert ist.

Mit dem Gehäuse 2.4 ist ein Teil einer drehstarren Ausgleichskupplung 2.6 durch eine Schraubverbindung fest verbunden. Weiterhin ist ein anderer Teil der Ausgleichskupplung 2.6 an der Abtasteinheit festgelegt. Der Außenring des Wälzlagers 3 ist ebenfalls an der Abtasteinheit fixiert. In der Praxis sind die zu messende Welle 10a und das Maschinenteil, an dem das Gehäuse 2.4 starr montiert ist, nicht exakt zueinander ausgerichtet. Unter Verwendung der Ausgleichskupplung 2.6 kann die zu messende Welle 10a starr und drehfest an das Trägerelement 1.1a der Winkelmesseinrichtung montiert werden, während das Gehäuse 2.4 fest an dem Maschinenteil angebaut werden kann. Unzulässig große Belastungen auf das Wälzlager 3 zum Beispiel infolge von Exzentrizität oder Fluchtungsfehlern können durch die axial- und radialelastische Ausgleichskupplung 2.6 vermieden werden.

Im Zuge der Montage der Winkelmesseinrichtung an die Welle 10a wird anfangs das Trägerelement 1.1a auf die Welle 10a aufgeschoben bis die Stirnfläche 1.13 des Trägerelements 1.1a an einem Absatz der Welle 10a ansteht. Danach werden die Verbindungselemente 1.2a montiert, indem zunächst jeweils ein Vorsprung 1.22a des Verbindungselements 1.2a in eine Ausnehmung 1.12a des Trägerelements 1.1 a eingeführt wird und gleichzeitig die ebene Fläche 1.24 des betreffenden Verbindungselement 1.2a auf einer achsparallelen Abflachung 10.1 der Welle 10a zu liegen kommt. Somit ist dann die ebene Fläche 1.24 des Verbindungselements 1.2a parallel zur Achse A orientiert. Danach wird der Ring 1.3 auf die Welle 10a aufgeschraubt. Am Ende des Aufschraubvorgangs wird das elastische Bauteil 1.21a komprimiert und die Verbindungselemente 1.2a axial verschoben, nachdem das Trägerelement 1.1a mit seiner Stirnfläche 1.13 an den entsprechenden Absatz der Welle 10a gedrückt worden ist. Bei weiterem Anziehen des Rings 1.3 berührt daraufhin jeweils die innen liegende konische Fläche 1.31 des Rings 1.3 die Formschräge 1.23 des Verbindungselements 1.2a. Durch den Ring 1.3 wird also das Verbindungselement 1.2a durch axiale Verschiebung in eine endgültige Formschlussposition gebracht und durch eine Keilwirkung radial gegen die Welle 10a vorgespannt. Die Keilwirkung entsteht durch das Zusammenwirken der Formschräge 1.23 mit der konischen Fläche 1.31.

Zudem ist an der Stirnfläche 1.13 ein Reibschluss mit dem Absatz der Welle 10a hergestellt, wobei sich die erforderliche Reibkraft aus dem Reibungskoeffizienten und der Axialkraft in Folge der axialen Verschiebung des Ringes 1.3 ergibt. Im Normalbetrieb wird das erforderliche Drehmoment für den Betrieb der Winkelmesseinrichtung, also zur Überwindung der Bremsmomente, durch diesen Reibschluss übertragen. Zur Herstellung einer vollständigen Sicherheit gegen Durchrutschen wird hier zusätzlich eine Wirkverbindung hergestellt, so dass ein Drehmoment um die Achse A zwischen dem Verbindungselement 1.2a und dem Trägerelement 1.1a formschlüssig übertragbar ist. Dies wird dadurch erreicht, dass die Vorsprünge 1.22a mit den Ausnehmungen 1.12a in Berührkontakt an achsparallelen Mitnehmerflächen formschlüssig zusammenwirken. Durch die neue Bauweise werden keine radialen Kräfte in das die Teilungsscheibe 1.11 tragende Trägerelement 1.1a eingeleitet, was zur Erhöhung der Präzision der Winkelmesseinrichtung beiträgt. Im Normalbetrieb der Winkelmesseinrichtung wird die Drehbewegung des Trägerelements 1.1a, wie oben bereits erwähnt, durch den Reibschluss an dessen Stirnfläche 1.13 winkeltreu eingeleitet. Die formschlüssige Wirkverbindung wird erst im Notfall zur Aufrechterhaltung der Sicherheit aktiv. Entsprechend kann diese durchaus in gewissen Grenzen ein Spiel aufweisen, abhängig davon wie viele Winkelsekunden oder -minuten aus sicherheitstechnischen Gesichtspunkten im Notbetrieb tolerierbar sind. Andererseits beeinträchtigt die zusätzliche Einrichtung einer formschlüssigen Wirkverbindung bei gleichzeitiger radialer Vorspannung nicht die Messgenauigkeit der Winkelmesseinrichtung im Normalbetrieb.

Die neuartige Konstruktion der Winkelmesseinrichtung zeichnet sich auch dadurch aus, dass der Bereich, in welchem die radiale Vorspannung zwischen der Welle 10a und dem Verbindungselement 1.2a eingeleitet wird, axial versetzt zum Wälzlager 3 angeordnet ist. Somit sind also insbesondere die Abflachung 10.1 und die ebene Fläche 1.24 mit axialem Versatz zum Wälzlager angeordnet. Schließlich ist auch der Ort der Wirkverbindung zur formschlüssigen Übertragung des Drehmoments mit axialem Versatz relativ zu dem Bereich, in welchem die radiale Vorspannung zwischen der Welle 10a und dem Verbindungselement 1.2a eingeleitet wird angeordnet, bzw. versetzt zur Abflachung 10.1 und zur ebenen Fläche 1.24 angeordnet.

Die folgende Beschreibung von weiteren Ausführungsbeispielen beschränkt sich im Wesentlichen auf diejenigen Sachverhalte, die gegenüber den anderen Ausführungsbeispielen, insbesondere gegenüber dem oben beschriebenen ersten Ausführungsbeispiel, abgewandelt sind.

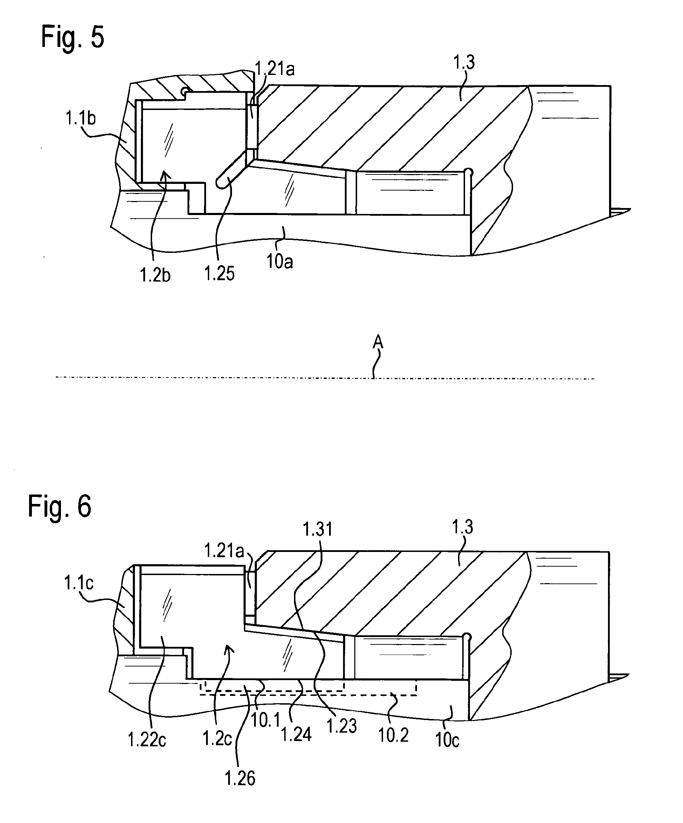

Die Winkelmesseinrichtung gemäß einem zweiten Ausführungsbeispiel (Figur 5) weist gegenüber dem ersten Ausführungsbeispiel ein abgewandeltes Trägerelement 1.1b sowie veränderte Verbindungselemente 1.2b auf. Die übrigen Komponenten der Winkelmesseinrichtung können als baugleich zum ersten Ausführungsbeispiel gesehen werden. Insbesondere weist nun zur Erreichung einer erhöhten Elastizität das Verbindungelement 1.2b einen in Tangentialrichtung durchgehenden Spalt 1.25 auf, so dass eine Materialverdünnung bzw. ein Festkörpergelenk entsteht. Der Spalt 1.25 ist vorteilhafterweise in einem 45° Winkel zur Achse A orientiert. Das Trägerelement 1.1 b kann dabei so ausgestaltet sein, dass dieses als Führung für das Verbindungelement 1.2b im Bereich der Wirkverbindung zur formschlüssigen Übertragung des Drehmoments an radial beabstandeten Flächen dient. Durch den Spalt 1.25 kann die erforderliche Biegeweichheit erreicht werden, so dass das Verbindungselement 1.2b durch axiale Verschiebung des Rings 1.3 in eine Formschlussposition gebracht werden kann, während zudem das Verbindungselement 1.2b radial gegen die Welle 10a vorgespannt wird.

In der Figur 6 ist eine Anordnung gemäß einem dritten Ausführungsbeispiel gezeigt. Hier sind die vier Verbindungselemente 1.2c in einer Weise abgewandelt, dass diese an ihren radial innen liegenden Flächen 1.24 jeweils eine Rippe 1.26 aufweisen. Diese Rippe 1.26 kann in eine Nut 10.2 der modifizierten Welle 10c eingreifen. Die Nut 10.2 und die Rippe 1.26 sind dabei so dimensioniert, dass diese in Umfangsrichtung spielfrei zusammenfügbar sind, während in Axialrichtung und in Radialrichtung jeweils ein Luftspalt zwischen den Wänden der Nut 10.2 und der Rippe 1.26 vorliegt. Durch die Konstruktion gemäß dem hier beschriebenen dritten Ausführungsbeispiel kann einerseits die Montage erleichtert werden, da ein Verkippen der Verbindungselemente 1.2c, insbesondere beim Anziehen des Rings 1.3, vermieden wird. Gleichzeitig kann das übertragbare Drehmoment zwischen der Welle 10c und den Verbindungselementen 1.2c durch die Nut 10.2 und die Rippe 1.26 erhöht werden.

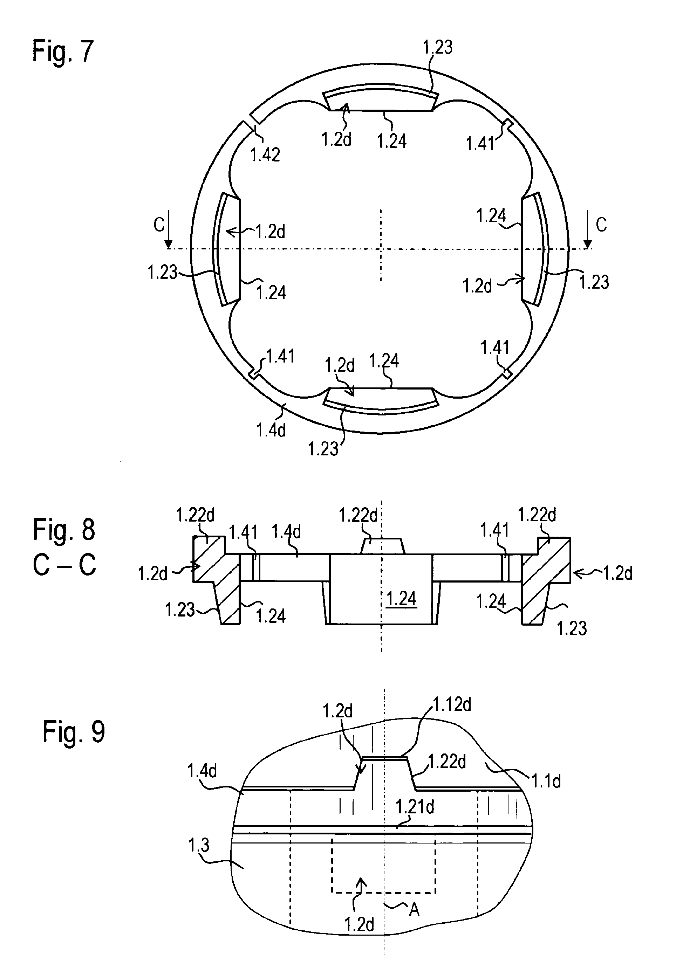

Gemäß einem vierten Ausführungsbeispiel, nach den Figuren 7, 8 und 9, sind die Verbindungselemente 1.2d durch einen Ringkörper 1.4d miteinander verbunden.

Der Ringkörper 1.4d weist radiale Ausnehmungen 1.41 sowie eine Trennfuge 1.42 auf. Durch die Ausnehmungen 1.41 und die Trennfuge 1.42 kann der Ringkörper 1.4d für die Montage elastisch aufgeweitet werden. In Abwandlung der bisher vorgestellten Ausführungsbeispiele weisen die Verbindungselemente 1.2d hier konische Vorsprünge 1.22d auf. Wie in der Figur 9 gezeigt, werden vorliegend die konischen Vorsprünge 1.22d durch Betätigung des Rings 1.3 über ein umlaufendes elastisches Bauteil 1.21d jeweils in eine konische Ausnehmung 1.12d des Trägerelements 1.1d gedrückt. Dadurch ist eine in Umfangsrichtung spielfreie Verbindung zwischen den Verbindungselementen 1.2d und dem Trägerelement 1.1d herstellbar, so dass ein Drehmoment um die Achse A zwischen dem Verbindungselement 1.2d und dem Trägerelement 1.1d formschlüssig übertragbar ist. Auch in diesem Ausführungsbeispiel weisen die Verbindungselemente 1.2d und die Trägerelemente 1.1d einander berührenden Mitnehmerflächen auf, deren jeweiliger Normalenvektor eine tangentiale Richtungskomponente bezogen auf die Achse aufweist, wenngleich hier die Mitnehmerflächen relativ zur Achse schräg geneigt angeordnet sind.

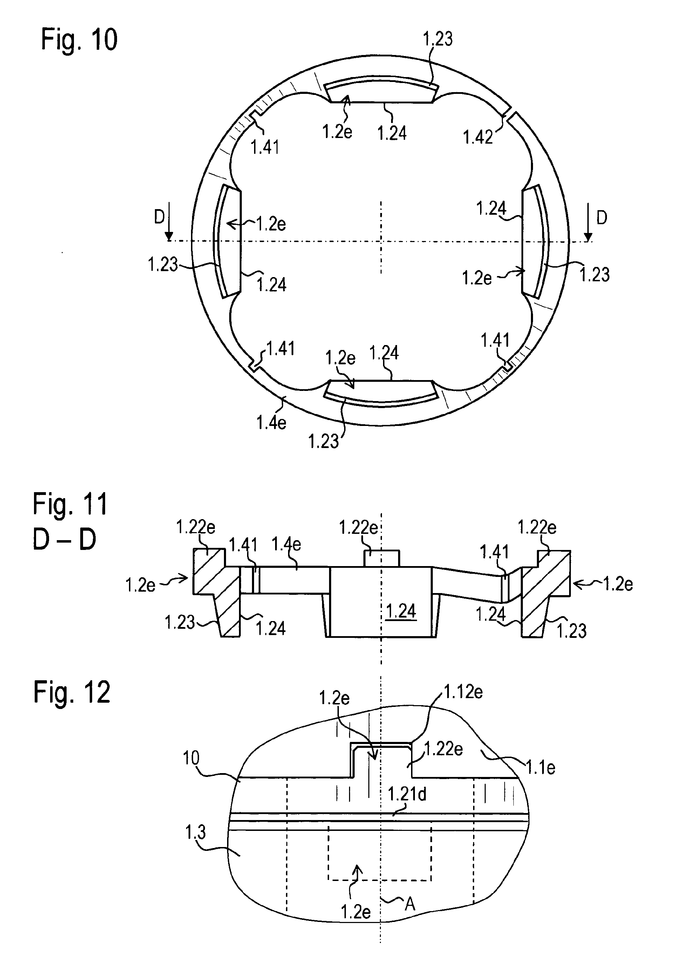

In den Figuren 10 bis 12 ist eine Bauweise gemäß einem fünften Ausführungsbeispiel gezeigt. Auch hier sind die Verbindungselemente 1.2e durch einen Ringkörper 1.4e miteinander verbunden. Der Ringkörper 1.4e weist hier jedoch in zwei Bereichen zwischen zwei Verbindungselementen 1.2e eine gewölbte Form auf, so dass also der Ringkörper 1.4e axiale Auswölbungen aufweist. Weiterhin weisen die Verbindungselemente 1.2e Vorsprünge 1.22e auf, die in Umfangsrichtung gegenüber den Ausnehmungen 1.12e des Trägerelements 1.1e ein Untermaß aufweisen. Am Ringkörper 1.4e ist auch hier ein umlaufendes elastisches Bauteil 1.21d angeordnet, wobei aufgrund der axialen Elastizität des Ringkörpers 1.4e bei entsprechender Ausführung auch auf dieses verzichtet werden kann. Wenn nun durch Drehen des Ringes 1.3 dieser in Axialrichtung verlagert wird, werden die beiden Auswölbungen in eine Ebene, die orthogonal zur Achse A orientiert ist, gezwungen. Dadurch erfolgt eine tangentiale Bewegung der zu den Auswölbungen benachbarten Verbindungselemente 1.2e und es kommt entsprechend zu Verschiebungen der Vorsprünge 1.22e in Umfangsrichtung. Das Trägerelement 1.1e und die Verbindungselemente 1.2e, insbesondere die Vorsprünge 1.22e, sind dabei so dimensioniert, dass im montierten Zustand die Vorsprünge 1.22e gegen die Wandungen bzw. Mitnehmerflächen der zugehörigen Ausnehmungen 1.12e gedrückt werden. Auf diese Weise wird eine formschlüssige Verbindung in Umfangsrichtung hergestellt, so dass ein Drehmoment um die Achse A zwischen den Verbindungselementen 1.2e und dem Trägerelement 1.1e formschlüssig und für beide Drehrichtungen spielfrei übertragbar ist.

Es versteht sich von selbst, dass die einzelnen abgewandelten Komponenten der verschieden Ausführungsbeispiele kombinierbar bzw. austauschbar sind. So kann beispielsweise ein Verbindungelement 1.2a, 1.2b, 1.2c gemäß den ersten drei Ausführungsbeispielen ebenso einen konischen Vorsprung 1.22d aufweisen und mit einem entsprechend angepassten Trägerelement 1.1 a, 1.1 b, 1.1c zusammenwirken.

## Patentansprüche

1. Winkelmesseinrichtung mit einer ersten Bauteilgruppe (1) und einer zweiten Bauteilgruppe (2), wobei die Bauteilgruppen (1, 2) relativ zueinander um eine Achse (A) drehbar sind und durch die Winkelmesseinrichtung eine relative Winkelstellung zwischen den Bauteilgruppen (1, 2) bestimmbar ist, wobei die erste Bauteilgruppe (1)
• ein Trägerelement (1.1a - 1.1e) zur umschließenden Aufnahme einer Welle (10a; 10c), an dem eine Teilungsscheibe (1.11) befestigt ist,
• ein Verbindungselement (1.2a - 1.2e) sowie
• ein Mittel (1.3) zur Festlegung des Verbindungselements (1.2a - 1.2e) relativ zum Trägerelement (1.1a - 1.1e) umfasst, und
die zweite Bauteilgruppe (2) ein Sensorelement (2.11) zum Abtasten der Teilungsscheibe (1.11) umfasst, wobei
das Trägerelement (1.1a - 1.1e) sowie das Verbindungselement (1.2a - 1.2e) so ausgestaltet sind, dass das Verbindungselement (1.2a - 1.2e) mit dem Trägerelement (1.1a - 1.1e) in einer Weise in Wirkverbindung bringbar ist, dass ein Drehmoment um die Achse (A) zwischen dem Verbindungselement (1.2a - 1.2e) und dem Trägerelement (1.1a - 1.1e) formschlüssig übertragbar ist, wobei durch das Mittel (1.3) zur Festlegung des Verbindungselements (1.2a - 1.2e) das Verbindungselement (1.2a - 1.2e) durch axiale Verschiebung in eine Formschlussposition bringbar und radial gegen die Welle (10a; 10c) vorspannbar ist, **dadurch gekennzeichnet, dass**
zwischen dem Mittel (1.3) zur Festlegung des Verbindungselements (1.2a - 1.2e) sowie dem Verbindungselement (1.2a - 1.2e) selbst ein elastisches Bauteil (1.21a; 1.21d) angeordnet ist oder
die Winkelmesseinrichtung mehrere Verbindungselemente (1.2d - 1.2e) aufweist, welche durch einen Körper (1.4e) miteinander verbunden sind, welcher axial-elastisch ausgestaltet ist.

2. Winkelmesseinrichtung gemäß dem Anspruch 1, wobei die radiale Vorspannung durch eine Keilwirkung erzeugbar ist.

3. Winkelmesseinrichtung gemäß dem Anspruch 2, wobei das Mittel (1.3) zur Festlegung des Verbindungselements (1.2a - 1.2e) oder das Verbindungselement (1.2a - 1.2e) selbst Formschrägen (1.23, 1.31) aufweisen zur Erzielung der Keilwirkung.

4. Winkelmesseinrichtung gemäß einem der vorhergehenden Ansprüche, wobei das Mittel (1.3) zur Festlegung des Verbindungselements (1.2a - 1.2e) als geschlossener Ring ausgestaltet ist.

5. Winkelmesseinrichtung gemäß dem Anspruch 4, wobei das Mittel (1.3) zur Festlegung des Verbindungselements (1.2a - 1.2e) ein Innengewinde aufweist.

6. Winkelmesseinrichtung gemäß einem der vorhergehenden Ansprüche, wobei die Winkelmesseinrichtung so ausgestaltet ist, dass das Verbindungselement (1.2a - 1.2e) an einem axialen Ende des Trägerelements (1.1a - 1.1e) angreift und am anderen axialen Ende des Trägerelements (1.1a - 1.1e) eine Fläche (F) hergestellt ist, welche reibschlüssig mit der Welle (10a; 10c) in Wirkverbindung bringbar ist.

7. Winkelmesseinrichtung gemäß einem der vorhergehenden Ansprüche, wobei das Mittel (1.3) zur Festlegung des Verbindungselements (1.2a - 1.2e) aus Axialrichtung betätigbar ist.

8. Winkelmesseinrichtung gemäß einem der vorhergehenden Ansprüche, wobei das Verbindungselement (1.2a - 1.2e) an seiner im bestimmungsgemäßen Gebrauch zur Achse (A) hingewandten Seite eine ebene Fläche (1.24) aufweist.

9. Winkelmesseinrichtung gemäß einem der vorhergehenden Ansprüche, wobei das Verbindungselement (1.2c) an seiner im bestimmungsgemäßen Gebrauch zur Achse (A) hingewandten Seite einen Vorsprung (1.26) aufweist.

## Claims

1. Angle measuring device comprising a first component assembly (1) and a second component assembly (2), wherein the component assemblies (1, 2) can be rotated relative to one another about an axis (A) and a relative angular position between the component assemblies (1, 2) can be determined by the angle measuring device, wherein the first component assembly (1) comprises
- a carrier element (1.1a - 1.1e) for receiving a shaft (10a; 10c) in an enclosing manner, a graduated disc (1.11) being fastened to the said support element,
- a connecting element (1.2a - 1.2e) and also
- a means (1.3) for fixing the connecting element (1.2a - 1.2e) relative to the carrier element (1.1a - 1.1e), and
the second component assembly (2) comprises a sensor element (2.11) for scanning the graduated disc (1.11), wherein
the carrier element (1.1a - 1.1e) and also the connecting element (1.2a - 1.2e) are designed such that the connecting element (1.2a - 1.2e) can be operatively connected to the carrier element (1.1a - 1.1e) in such a way that a torque about the axis (A) can be transmitted in a positively locking manner between the connecting element (1.2a - 1.2e) and the carrier element (1.1a - 1.1e), wherein the connecting element (1.2a - 1.2e) can be moved by axial displacement into a positively locking position and can be prestressed radially against the shaft (10a; 10c) by the means (1.3) for fixing the connecting element (1.2a - 1.2e), **characterized in that**
an elastic component (1.21a; 1.21d) is arranged, between the means (1.3) for fixing the connecting element (1.2a - 1.2e) and the connecting element (1.2a - 1.2e) itself, or
the angle measuring device has a plurality of connecting elements (1.2d - 1.2e) which are connected to one another by a body (1.4e) which is of axially elastic design.

2. Angle measuring device according to Claim 1, wherein the radial prestress can be generated by a wedge effect.

3. Angle measuring device according to Claim 2, wherein the means (1.3) for fixing the connecting element (1.2a - 1.2e) or the connecting element (1.2a - 1.2e) itself has shaped inclines (1.23, 1.31) for achieving the wedge effect.

4. Angle measuring device according to one of the preceding claims, wherein the means (1.3) for fixing the connecting element (1.2a - 1.2e) is designed as a closed ring.

5. Angle measuring device according to Claim 4, wherein the means (1.3) for fixing the connecting element (1.2a - 1.2e) has an internal thread.

6. Angle measuring device according to one of the preceding claims, wherein the angle measuring device is designed such that the connecting element (1.2a - 1.2e) acts on an axial end of the carrier element (1.1a-1.1e) and an area (F) which can be operatively connected to the shaft (10a; 10c) in a frictional manner is produced at the other axial end of the carrier element (1.1a - 1.1e).

7. Angle measuring device according to one of the preceding claims, wherein the means (1.3) for fixing the connecting element (1.2a - 1.2e) can be operated from the axial direction.

8. Angle measuring device according to one of the preceding claims, wherein the connecting element (1.2a - 1.2e) has a planar area (1.24) on its side which faces the axis (A) when used as intended.

9. Angle measuring device according to one of the preceding claims, wherein the connecting element (1.2c) has a projection (1.26) on its side which faces the axis (A) when used as intended.

## Revendications

1. Dispositif de mesure d'angle comprenant un premier groupe de composants (1) et un deuxième groupe de composants (2), les groupes de composants (1, 2) pouvant pivoter l'un par rapport à l'autre autour d'un axe (A) et une position angulaire relative entre les groupes de composants (1, 2) pouvant être déterminée par le dispositif de mesure d'angle, le premier groupe de composants (1) comprenant
- un élément porteur (1.1a - 1.1e) destiné à accueillir de manière enveloppante un arbre (10a ; 10c) auquel est fixé une plaquette de division (1.11),
- un élément de liaison (1.2a - 1.2e) ainsi
- qu'un moyen (1.3) de positionnement de l'élément de liaison (1.2a - 1.2e) par rapport à l'élément porteur (1.1a - 1.1e), et
le deuxième groupe de composants (2) comprenant un élément capteur (2.11) destiné à balayer la plaquette de division (1.11),
l'élément porteur (1.1a - 1.1e) ainsi que l'élément de liaison (1.2a - 1.2e) étant configurés de telle sorte que l'élément de liaison (1.2a - 1.2e) peut être amené en liaison active avec l'élément porteur (1.1a - 1.1e) afin qu'il soit possible de transmettre, par complémentarité de formes, un couple autour de l'axe (A) entre l'élément de liaison (1.2a - 1.2e) et l'élément porteur (1.1a - 1.1e), le moyen (1.3) de positionnement de l'élément de liaison (1.2a - 1.2e) permettant d'amener l'élément de liaison (1.2a - 1.2e) dans une position de complémentarité de formes par coulissement axial et de le précontraindre dans le sens radial contre l'arbre (10a ; 10c), **caractérisé en ce qu'**un composant élastique (1.21a ; 1.21d) est disposé entre le moyen (1.3) de positionnement de l'élément de liaison (1.2a - 1.2e) et l'élément de liaison (1.2a-1.2e) lui-même ou
le dispositif de mesure d'angle possède plusieurs éléments de liaison (1.2d - 1.2e) qui sont reliés ensemble par un corps (1.4e), lequel est configuré avec une élasticité axiale.

2. Dispositif de mesure d'angle selon la revendication 1, avec lequel la précontrainte radiale peut être générée par un effet de clavette.

3. Dispositif de mesure d'angle selon la revendication 2, avec lequel le moyen (1.3) de positionnement de l'élément de liaison (1.2a - 1.2e) ou l'élément de liaison (1.2a - 1.2e) lui-même possède des dépouilles (1.23, 1.31) destinées à obtenir l'effet de clavette.

4. Dispositif de mesure d'angle selon l'une des revendications précédentes, avec lequel le moyen (1.3) de positionnement de l'élément de liaison (1.2a - 1.2e) est configuré sous la forme d'un anneau fermé.

5. Dispositif de mesure d'angle selon la revendication 4, avec lequel le moyen (1.3) de positionnement de l'élément de liaison (1.2a - 1.2e) possède un taraudage.

6. Dispositif de mesure d'angle selon l'une des revendications précédentes, avec lequel le dispositif de mesure d'angle est configuré de telle sorte que l'élément de liaison (1.2a - 1.2e) vient en prise au niveau d'une extrémité axiale de l'élément porteur (1.1a - 1.1e) et une surface (F) est produite à l'autre extrémité axiale de l'élément porteur (1.1a - 1.1e), laquelle peut être amenée en liaison active avec l'arbre (10a ; 10c) par friction.

7. Dispositif de mesure d'angle selon l'une des revendications précédentes, avec lequel le moyen (1.3) de positionnement de l'élément de liaison (1.2a - 1.2e) peut être actionné depuis le sens axial.

8. Dispositif de mesure d'angle selon l'une des revendications précédentes, avec lequel l'élément de liaison (1.2a - 1.2e) possède une surface plane (1.24) sur son côté qui, lors d'une utilisation conforme à sa destination, est orienté vers l'axe (A).

9. Dispositif de mesure d'angle selon l'une des revendications précédentes, avec lequel l'élément de liaison (1.2c) possède une partie en saillie (1.26) sur son côté qui, lors d'une utilisation conforme à sa destination, est orienté vers l'axe (A).
